# EUROPEAN PATENT APPLICATION

(11) **EP 1 961 297 A2**
(43) Date of publication of application: **27.08.2008**
(21) Application number: 08151772.4
(22) Date of filing: 21.02.2008
(51) Int. Cl.: A01K 49/00

(54) **Cage for queen bees**

(30) Priority: 26.02.2007 IT BS20070025
(71) Applicant: Scalvini, Dante, 25072 Bagolino (Brescia) (IT)
(72) Inventor: Scalvini, Dante, 25072 Bagolino (Brescia) (IT)
(74) Representative: Pulieri, Gianluca Antonio

(57) **Abstract**

The invention relates to a cage (1) able to accommodate a queen bee when she needs to be temporarily separated from the nursery of the hive, comprising at least one wall having at least one inner portion constructed so as to perfectly reproduce the hexagonal cells (11) of a honeycomb.

## Description

The present invention relates to the bee-keeping sector and specifically to a cage for queen bees.

As beekeepers know, the hive must be periodically disinfested of mites by sprinkling the netting inside it with disinfectant substances. One of the problems encountered in these operations is that the mites tend to hide and reproduce in the cells of the honeycomb, under the eggs laid by the queen bee, feeding then on the young bees.

Each of the cells being moreover sealed with wax by the bees, the treatment proves rather ineffective.

Attempts have been made to overcome this problem by closing the queen bee inside a cage inserted in the netting of the drawer of the hive, so as to prevent her from laying eggs in the nursery. By so doing, treatment of the hive is much more efficient but the drawback is the stress caused to the queen bee who, despite being continually looked after by the bees, cannot lay her eggs and therefore follow her natural life cycle.

The purpose of the present invention is to obviate such drawback by, on the one hand, allowing the queen bee to continue to lay her eggs, and, on the other, performing a rapid and efficient disinfestation of the nets free of eggs.

Such objective is achieved by means of a cage for queen bees comprising at least one wall having at least a portion of the inner surface shaped so as to perfectly reproduce the cells of the honeycomb. The queen bee, when closed in the cage, will consequently not realise the difference between it and the nursery and will therefore continue to lay eggs in the cells.

In order to reproduce as faithfully as possible one side of the honeycomb structure, the cells have a hexagonal section with a cusp-shaped base, that is composed of three equal lozenges forming a concave surface.

Advantageously, the cage is made entirely of moulded and/or heat-moulded plastic material.

Further characteristics and advantages of the cage according to the invention will be evident from the description below, made by way of an indicative and nonlimiting example, with reference to the attached figures, wherein:

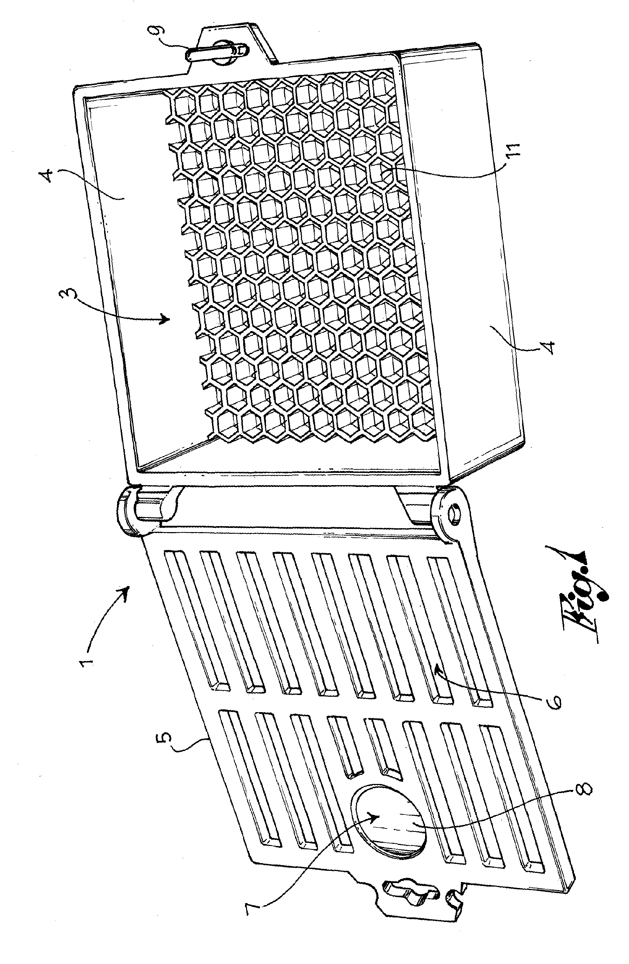

- figure 1 shows a perspective view f the cage according to the invention, in an open configuration;

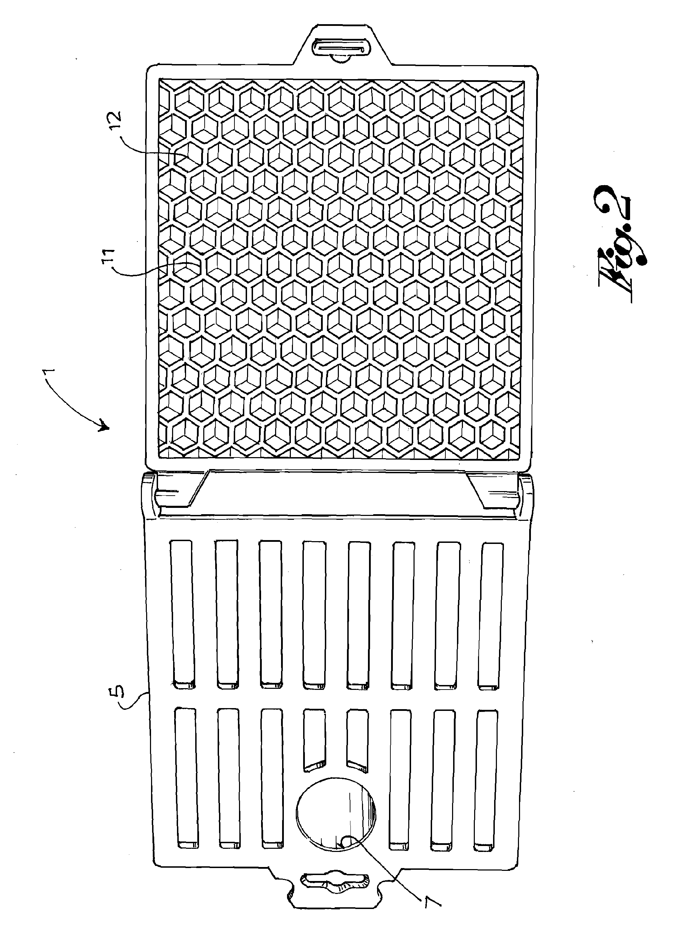

- figure 2 shows an overhead plan view of the cage in figure 1; and

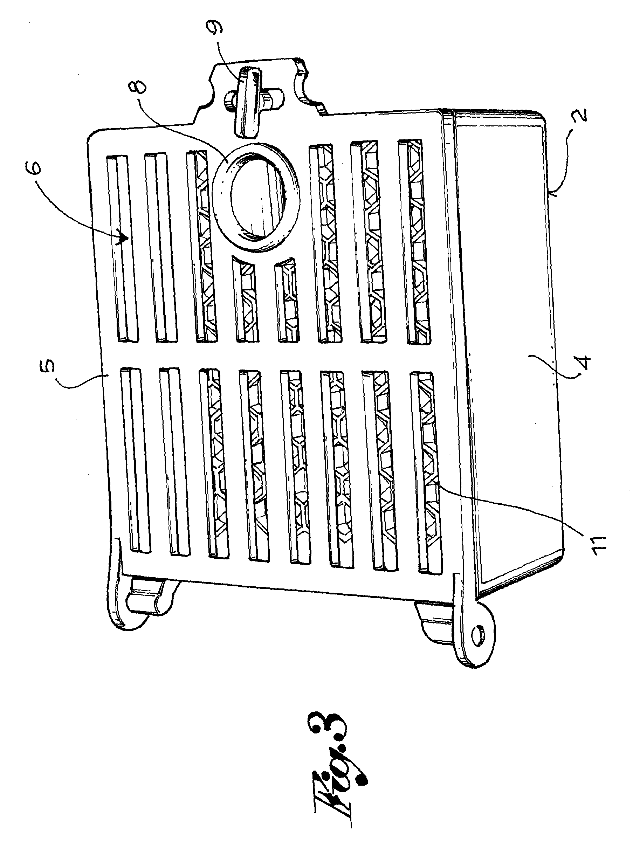

- figure 3 shows the cage in a closed configuration.

With reference to the aforesaid figures, reference numeral 1 globally denotes a cage for queen bees according to the present invention. The cage is suitable for positioning in an aperture of the net or honeycomb of the hive.

The cage 1 comprises a base 2 defining an inner bottom 3, lateral walls 4 and a lid 5. According to one embodiment, the cage 1 is in the shape of a parallelepiped.

Preferably, the base 2 and the lid 5 have a larger surface area than the lateral walls 4.

At least one side of the cage 1, preferably the lid 5, is in the form of an anti-queen grid, in other words has apertures 6 sized so as to prevent the transit of the queen bee through them but so as to allow the transit of the worker bees, who are a little smaller.

One side of the cage, for example the lid with grid, has an exit aperture 7 for the queen bee. A stopper 8 is associated with such aperture 7 which is applied after the queen bee has gone into the cage to prevent her from coming out. The aperture 7 and relative stopper 8 are, for example, a circular shape.

According to one embodiment, the lid 5 is hinged to one of the lateral walls 4 and may be blocked in the closed position by means of a latch 9.

According to the invention, at least a part of the inner surface of at least one of the walls of the cage, preferably the bottom 3 of the base 2, is shaped so as to exactly reproduce the cells 11 of a natural honeycomb. In other words, the bottom 3 of the base 2 is composed of a plurality of cells 11 with a hexagonal cross-section positioned alongside each other so as to geometrically match. Advantageously, the bottom 12 of said cells is, as in nature, cusp-shaped, in other words composed of three equal lozenges forming a concave surface.

Preferably, the entire surface of the bottom 3 of the base 2 is occupied by the cells 11.

In addition, the depth of the cage, that is the distance between the bottom 3 where the cells 11 are and the lid 5, must be chosen so as to allow the bees to construct a natural honeycomb, that is of wax, over the artificial cell bottom. This makes it possible to obtain, when the cage is in use, an environment which best reproduces the natural environment which the queen bee is used to living in.

For example, considering that the cells of a natural honeycomb are approximately 10-15 mm deep, and leaving another 10-15 mm of free space for the bees, the depth of the cage might be chosen as 20-30 mm.

This way, the queen bee, once introduced to the cage, does not notice the difference compared to when she was free inside the drawer, and therefore continues to lay eggs in the cells of the cage. While the bees, passing though the anti-queen grid, can continue to feed and look after the queen bee and her brood. The presence of the eggs inside the cage and the smell which they emanate also has the effect of reassuring the bees and thus keeping them together. Otherwise, the lack of a brood for a certain period of time provokes disorientation and stress in the bees.

Advantageously, the cage 1 is made entirely from a moulded and/or heat-moulded plastic material.

In definitive terms, the cage according to the present invention permits, like known cages, the seclusion of the queen bee for a certain period of time and therefore the prevention of a brood in the honeycomb of the hive so as to enable efficient anti-mite treatment. At the same time, the cage so conformed enables the queen bee to continue to lay eggs following her biological cycle, thus avoiding causes of stress and imbalances to her and the bees in the colony.

A technician skilled in this area, may make modifications and adjustments to the forms of embodiment of the cage described above or substitute elements with others functionally equivalent so as to satisfy contingent requirements, all contained within the sphere of the invention as defined by the following claims. Each of the characteristics described as belonging to one possible embodiment may be made regardless of the other embodiments described.

## Claims

1. Cage (1) suitable for placing in the drawer of a beehive to receive a queen bee, comprising at least one wall having at least one portion of the inner surface shaped so as to exactly reproduce the cells (11) of a honeycomb.

2. Cage according to claim 1, wherein said portion of inner surface is composed of a plurality of cells (11) with a hexagonal cross-section positioned alongside each other so as to geometrically match.

3. Cage according to claim 2, wherein the bottom (12) of said cells is cusp-shaped, that is composed of three equal lozenges forming a concave surface.

4. Cage according to any of the previous claims, wherein the entire inner surface is occupied by cells (11).

5. Cage according to any of the previous claims, comprising a base (2) defining an inner bottom (3), lateral walls (4) and a lid (5), wherein said inner surface of hexagonal cells is that of said bottom of the base.

6. Cage according to claim 5, wherein the base (2) and the lid (5) have a larger surface area than the lateral walls (4).

7. Cage according to claims 5 or 6, wherein at least one side of the cage (1), preferably the lid (5), is in the form of an anti-queen grid.

8. Cage according to any of the previous claims, wherein in one of its sides there is an exit aperture (7) for the queen bee, a removable stopper (8) being associated with said aperture.

9. Cage according to claim 8, wherein said exit aperture (7) is made in the lid.

10. Cage according to any of the previous claims from 5 to 9, wherein the lid (5) is hinged to one of the lateral walls (4) and can be blocked in the closed position by means of a latch (9).

11. Cage according to any of the previous claims, **characterised by** the fact of being made from a moulded and/or heat-moulded plastic material.

12. Cage according to any of the previous claims, wherein above the wall of cells there is a free space of at least 20 mm in height to allow the bees to build natural cells over the plastic cells of the wall.
